# EUROPÄISCHE PATENTSCHRIFT

(11) **EP 1 652 014 B1**
(45) Veröffentlichungstag und Bekanntmachung des Hinweises auf die Patenterteilung: **06.05.2020**
(21) Anmeldenummer: 04734657.2
(22) Anmeldetag: 25.05.2004
(51) Int. Cl.: G05D 16/04, F24D 19/10, G05D 7/01

(54) **HEIZUNGS-VENTILANORDNUNG**
HEATING VALVE ARRAY
SYSTEME A SOUPAPES POUR DISPOSITIF DE CHAUFFAGE

(30) Priorität: 27.05.2003 DE 10323981
(43) Veröffentlichungstag der Anmeldung: 03.05.2006
(73) Patentinhaber: Danfoss A/S, 6430 Nordborg (DK)
(72) Erfinder: M LB K, Jens, J rgen, DK-6430 Nordborg (DK)
(74) Vertreter: Keil & Schaafhausen Patentanwälte PartGmbB
(86) Internationale Anmeldenummer: PCT/DK2004/000363
(87) Internationale Veröffentlichungsnummer: WO 2004/107075

(56) Entgegenhaltungen:
- DE-A- 19 824 630
- DE-U- 1 855 899
- GB-A- 2 039 344
- US-A- 6 062 257

## Beschreibung

Die Erfindung betrifft eine Heizungs-Ventilanordnung mit einem Gehäuse, das einen Einlaß und einen Auslaß aufweist, einer ersten Ventileinrichtung, die einen Ventilsitz und ein Ventilelement aufweist, und einer zweiten Ventileinrichtung, die eine konstante Druckdifferenz über der ersten Ventileinrichtung einstellt, wobei das Gehäuses einen ersten Teil und einen zweiten Teil aufweist, die miteinander verbunden sind, und die erste Ventileinrichtung ausschließlich in dem ersten Teil des Gehäuses angeordnet ist.

Eine vergleichbare Ventilanordnung ist aus WO 01/13017 A2 bekannt. In einer derartigen Ventilanordnung sorgt die zweite Ventileinrichtung dafür, daß immer eine konstante Druckdifferenz über der ersten Ventileinrichtung anliegt und zwar unabhängig von den Drücken am Einlaß und am Auslaß. Damit ist es möglich, eine Mengenregelung durchzuführen, d.h. die durch die zweite Ventileinrichtung durchgelassene Menge der Flüssigkeit ist abhängig von der Öffnungsweite der Ventileinrichtung, vereinfacht ausgedrückt, dem Abstand zwischen dem Ventilsitz und dem Ventilelement.

Eine derartige Ventilanordnung, bei der man mit Hilfe der zweiten Ventileinrichtung dafür sorgt, daß die Druckdifferenz über die erste Ventileinrichtung konstant bleibt, ist insbesondere in Zentralheizungsanlagen von Vorteil, weil hier ansonsten die Gefahr besteht, daß der Verbrauch an Wärmeträgerflüssigkeit durch andere Heizkörper den Druck über das Heizungsventil eines Heizkörpers negativ beeinflußt. Durch die zweite Ventileinrichtung wird dieses Problem weitgehend eliminiert.

Dieser Vorteil wurde aber bislang mit einem Nachteil erkauft, der darin besteht, daß die Ventilanordnung eine relativ große Baugröße besitzt.

Aus DE 198 24 630 A1 ist eine weitere Ventilanordnung bekannt mit einer Drossel und einem Regelventil. Die Anordnung dieser drei Ventile, dem Membranregler, der Drossel und dem Regelventil, ist sowohl für eine Volumenstromals auch Differenzdruckregelung geschaffen. Die Ventile sind gemeinsam in einem kompakten Ventilgehäuse eingebaut. Dieses Ventilgehäuse weist einen ersten un einen zweiten Teil auf, die miteinander verbunden sind. Im ersten Teil des Gehäuses ist die Drossel und das Regelventil angeordnet. Der Membran Regler ist axial bezüglich einer Eintrittsöffnung und einer Austrittsöffnung angeordnet und befindet sich sowohl im ersten als auch im zweiten Teil des Ventilgehäuses.

Der Erfindung liegt die Aufgabe zugrunde, den Aufbau der Ventilanordnung zu vereinfachen.

Diese Aufgabe wird bei einer Heizungs-Ventilanordnung der eingangs genannten Art dadurch gelöst, daß die erste Ventileinrichtung ausschließlich in einem ersten Teil des Gehäuses und die zweite Ventileinrichtung ausschließlich in einem zweiten Teil des Gehäuses angeordnet sind, und daß der erste Teil und der zweite Teil des Gehäuses miteinander verbunden sind.

Mit dieser Ausgestaltung erreicht man einen sehr kompakten Aufbau der Ventilanordnung, d.h. die Ventil-anordnung benötigt nur einen relativ kleinen Bauraum. Darüber hinaus kommt man mit einer relativ kleinen Anzahl von Komponenten aus. Die Fertigung wird vereinfacht, weil man die beiden Teile des Gehäuses mit ihren jeweiligen Ventileinrichtungen getrennt vorfertigen und gegebenenfalls auch auf Funktionsfähigkeit hin testen kann. Die Bevorratung wird vereinfacht. Dies gilt sowohl für die Fertigung als auch für die Ersatzteilbeschaffung. Man ist relativ flexibel bei der Kombination von unterschiedlichen ersten Ventileinrichtungen mit unterschiedlichen zweiten Ventileinrichtungen. Die einzige Voraussetzung, die hier erfüllt werden muß, ist, daß die beiden Teile des Gehäuses miteinander verbunden werden können. Die Trennfläche zwischen den beiden Teilen des Gehäuses bildet damit sozusagen die eigentliche Schnittstelle.

Vorzugsweise weist die zweite Ventileinrichtung eine Membran auf, die ein Druckregel-Ventilelement betätigt, wobei die Membran zwischen dem ersten Teil und dem zweiten Teil des Gehäuses eingespannt ist. Die Membran übernimmt dabei zwei Funktionen. Zum einen dient sie, wie erwähnt, zur Betätigung des Druckregel-Ventilele-ments, also des Ventilelements der zweiten Ventileinrichtung. Zum anderen dichtet sie die Verbindung zwischen dem ersten und dem zweiten Teil des Gehäuses ab. Dies erleichtert die Fertigung.

Hierbei ist bevorzugt, daß ein Druckübergangskanal vom Ausgang zu der der ersten Ventileinrichtung abgewandten Seite der Membran eine Trennfläche zwischen dem ersten Teil und dem zweiten Teil des Gehäuses durchsetzt. Dies vereinfacht den konstruktiven Aufbau. Es sind keine getrennten Kanäle mehr erforderlich, die außen um das Gehäuse herumgeführt werden müssen. Trotz der Trennung des Gehäuses in zwei (oder mehr) Teile ist es möglich, den Druckübertragungskanal so zu führen, wie dies von herkömmlichen Differenzdruck-Regelventilen her bekannt ist.

Bevorzugterweise ist der Druckübertragungskanal außerhalb der Membran angeordnet. Man muß die Membran also nicht mit einer Öffnung versehen, um Druck durch den Druckübertragungskanal übertragen zu können. Dadurch bleibt die Membran in ihrer ursprünglich vorgesehenen Form erhalten. Das Risiko von Beschädigungen bleibt gering. Die Lebensdauer der Ventilanordnung steigt.

Hierbei ist bevorzugt, daß die Membran punktsymmetrisch ausgebildet ist. Trotz des Vorhandenseins des Druckübertragungskanals lassen sich die Belastungen auf die Membran symmetrisch halten. Die Membran kann beispielsweise eine Kreisfläche aufweisen. Auch dies hält die Gefahr von Spannungen, die in ungewünschten Richtungen entstehen können, klein, so daß die Membran eine relativ große Lebensdauer hat.

Bevorzugterweise ist das Druckregel-Ventilelement der zweiten Ventileinrichtung als Hohlzylinder ausgebildet. Die Heizungsflüssigkeit, die in den Heizkörper strömen soll, strömt also durch das Druckregel-Ventilelement. Hier steht also ein relativ großer Strömungsquerschnitt zur Verfügung. Dies hat den Vorteil, daß außer an der durch die zweite Ventileinrichtung bewußt gebildeten Drosselstelle nur geringe Druckabfälle auftreten. Darüber hinaus wird das Risiko einer Geräuschbildung klein gehalten.

Vorzugsweise ist das Druckregel-Ventilelement in einem Einsatz geführt, der im zweiten Teil des Gehäuses befestigt ist. Dies vereinfacht die Fertigung. Man kann den zweiten Teil des Gehäuses mit relativ großen Toleranzen fertigen und dennoch eine relativ genaue Führung des Druckregel-Ventilelements dadurch erreichen, daß man den besagten Einsatz verwendet. Zwischen dem Druckregel-Ventilelement und dem Einsatz kann natürlich eine Dichtung vorgesehen sein, genau wie der Einsatz unter Zwischenlage einer Dichtung im zweiten Teil des Gehäuses befestigt ist. Die Dichtungen können durch O-Ringe oder andere Dichtringe gebildet sein.

Hierbei ist bevorzugt, daß der Einsatz in den zweiten Teil des Gehäuses eingeschraubt ist. Das Risiko, daß Belastungen auf den Einsatz wirken, die ihn drehen, ist sehr gering. Das Einschrauben ist also eine relativ einfache Möglichkeit, um den Einsatz zuverlässig auch längerfristig im Gehäuse in einer gewünschten Position festzuhalten.

Bevorzugterweise weist die zweite Ventileinrichtung ein Ventilsitzelement auf, das auf einem Vorsprung im zweiten Teil des Gehäuses befestigt ist. Auch dies vereinfacht den Aufbau des zweiten Teils des Gehäuses. Auch im Bereich des Ventilsitzes muß das Gehäuse nicht mit einer übermäßig großen Genauigkeit gefertigt werden. Die Zuordnung von Ventilsitz und Ventilelement kann durch das Ventilsitzelement mit einer ausreichend großen Genauigkeit hergestellt werden.

Hierbei ist bevorzugt, daß das Ventilsitzelement einen Korpus aufweist, durch den ein Befestigungselement geführt ist und der eine Beschichtung trägt. Die Beschichtung kann dann an das Strömungsverhalten der Flüssigkeit angepaßt sein und beispielsweise darauf ausgelegt werden, Geräusche der durchströmenden Flüssigkeit möglichst klein zu halten. Der Korpus kann hingegen eine Festigkeit aufweisen, die ausreicht, um das Ventilsitzelement mit der notwendigen Zuverlässigkeit im Gehäuse festzuhalten.

Vorzugsweise weisen der erste Teil und der zweite Teil des Gehäuses übereinstimmende Bolzenöffnungen auf, durch die Spannbolzen geführt sind. Die Verbindung zwischen den beiden Teilen des Gehäuses erfolgt also einfach dadurch, daß man Bolzen durch die Bolzenöffnungen führt und sie entweder in einem der beiden Teile des Gehäuses verschraubt oder mit Muttern sichert.

Die Erfindung wird im folgenden anhand eines bevorzugten Ausführungsbeispiels in Verbindung mit der Zeichnung näher beschrieben. Hierin zeigen:
- Fig. 1: einen schematischen Längsschnitt durch eine Heizungs-Ventilanordnung und
- Fig. 2: eine Draufsicht auf die Ventilanordnung.

Eine Heizungs-Ventilanordnung 1 weist ein in zwei Teile A, B unterteiltes Gehäuse auf, das einen Einlaß 2 und einen Auslaß 3 aufweist. Am Einlaß 2 ist ein Rohr 4 angeschlossen, mit dem Wärmeträgerflüssigkeit, beispielsweise heißes Wasser, von einem gebäudefesten Leitungswasser zugeführt wird. Am Auslaß 3 ist ein Heizkörper 5 angeschlossen, von dem ebenfalls nur ein Anschlußstutzen zu erkennen ist.

Zur Steuerung der Wärmeträgerflüssigkeit vom Einlaß 2 zum Auslaß 3 ist eine erste Ventileinrichtung 6 vorgesehen, die ein Ventilelement 7 aufweist, das gegenüber einem Ventilsitz 8 bewegbar ist. Das Ventilelement 7 ist in Öffnungsrichtung vom Ventilsitz 8 vorgespannt. In Schließrichtung kann es über einen Stift 9 beaufschlagt werden, der nach außen geführt ist. An diesem Stift 9 kann ein nicht näher dargestellter, aber an sich bekannter Thermostatventilaufsatz angreifen. Die erste Ventileinrichtung ist im ersten Teil A des Gehäuses angeordnet.

Wenn eine derartige Ventileinrichtung 6 an einem Leitungssystem 4 angeschlossen ist, das eine Vielzahl von Heizkörpern versorgt, dann ist der Druck, der am Einlaß 2 ansteht, u.a. abhängig von dem Öffnungsgrad der übrigen an das Leitungssystem 4 angeschlossenen Heizkörper. Dieser Druck hat aber Einfluß auf die Menge des zwischen dem Ventilelement 7 und dem Ventilsitz 8 hindurchströmenden Wärmeträgermediums.

Um diese Einflüsse auszuschalten, weist die Ventil-anordnung 1 eine zweite Ventileinrichtung 10 auf, die eine Druckdifferenz über die erste Ventileinrichtung 6 konstant hält. Die zweite Ventileinrichtung 10 ist also ein Druckregelventil. Sie ist im zweiten Teil B des Gehäuses angeordnet.

Die zweite Ventileinrichtung 10 weist ein Druckregel-Ventilelement 11 auf, das mit einem Ventilsitz 12 zusammenwirkt. Das Druckregel-Ventilelement 11 ist als Hohlzylinder ausgebildet. Flüssigkeit, die durch einen Spalt 13 zwischen dem Druckregel-Ventilelement 11 und dem Ventilsitz 12 tritt, durchströmt also das Druckregel-Ventilelement 11 und gelangt dann in eine Kammer 14, die auf der Eingangsseite der ersten Ventileinrichtung 6 angeordnet ist.

Der Ventilsitz 12 ist an einem Ventilsitzelement 15 angeordnet, das an einem Vorsprung 16 im zweiten Teil B des Gehäuses befestigt ist und zwar mit Hilfe einer Schraube 17, die als Befestigungselement wirkt. Das Ventilsitzelement 15 weist einen Korpus 18 auf, durch den die Schraube 17 geführt ist, und eine Beschichtung 19.

Die beiden Teile A, B liegen entlang einer Trennfläche C aneinander an und sind miteinander verbunden.

Das Druckregel-Ventilelement 11 ist in einem Einsatz 20 geführt, der in den zweiten Teil B des Gehäuses eingeschraubt ist. Zwischen dem Einsatz 20 und dem zweiten Teil des Gehäuses B ist eine Dichtung 21, beispielsweise in Form eine O-Rings, angeordnet. Auch zwischen dem Druckregel-Ventilelement 11 und dem Einsatz 20 ist eine Dichtung 22 vorgesehen. Das Druckregel-Ventilelement 11 wird durch eine Druckfeder 23 vom Ventilsitzelement 15 weg belastet.

Das Druckregel-Ventilelement 11 ist verbunden mit einer Membran 24 und durchsetzt die Membran 24, die mit einem Teil ihrer Erstreckung auf einer Stützplatte 25 aufliegt. Auch die Stützplatte 25 ist mit dem Druckregel-Ventilelement 11 verbunden. Die Membran 24 weist eine umlaufende Sicke 26 auf und ist mit ihrem äußeren Rand 27 zwischen dem ersten Teil A und dem zweiten Teil B des Gehäuses eingespannt. Die Membran 24 hat damit zwei Aufgaben. Zum einen dient sie dazu, das Druckregel-Ventilelement 11 gegen die Kraft der Druckfeder 23 zu bewegen, wenn der Druck in der Kammer 14 die Kraft der Druckfeder 23 übersteigt. Zum anderen dient sie dazu, eine Abdichtung der Druckkammer 14 nach außen zu bewirken und die Verbindung zwischen dem ersten Teil A und dem zweiten Teil B des Gehäuses zu bewirken.

Die Membran 24 ist im wesentlichen punktsymmetrisch um eine nicht näher dargestellte Mittelachse des Druckregel-Ventilelements angeordnet, so daß bei einer Druckbelastung im Grunde keine Querspannungen entstehen können.

Ein Druckübertragungskanal 28 erstreckt sich vom Auslaß 3 zu einer Kammer 29 auf der der Kammer 14 gegenüberliegenden Seite der Membran 24. Der Druckübertragungskanal 28 durchsetzt dabei die Trennfläche C. Die Kammer 29 ist im übrigen durch die Membran 24, das Druckregel-Ventilelement 11, den Einsatz 20 und den Teil B des Gehäuses begrenzt.

Die zweite Ventileinrichtung 10 hat im Grunde eine reine Druckregelfunktion für die erste Ventileinrichtung 6. Das Druckregel-Ventilelement 11 nimmt aufgrund der Verbindung mit der Membran 24 eine Position ein, in der der Druck in der Kammer 14, also auf der Oberseite der Membran 24, der Summe vom Druck in der Kammer 29, also unter der Membran 24, und der Federkraft der Druckfeder 23 entspricht. Der Druck in der Kammer 14 ist der Druck vor der ersten Ventileinrichtung 6 und der Druck in der Kammer 29 ist der Druck am Auslaß 3, also hinter der ersten Ventileinrichtung 6. Das Druckregel-Ventilele-ment wird somit eine Druckdifferenz über der ersten Ventileinrichtung 6 aufrechterhalten, die der Kraft der Druckfeder 23 entspricht, unabhängig vom Druck am Einlaß 2 und am Auslaß 3.

Die erste Ventileinrichtung 6 ist dann im Grunde das Regelventil, das den Strom der Heizungsflüssigkeit regelt, wobei ein größerer oder ein kleinerer Öffnungsgrad der Ventileinrichtung 6 einen größeren oder kleineren Durchfluß von Flüssigkeit ergeben wird. Die Druckregelung durch die zweite Ventileinrichtung 10 führt zu einem festen Zusammenhang zwischen dem Öffnungsgrad und dem Flüssigkeitsdurchsatz, da die Druckdifferenz konstant gehalten wird.

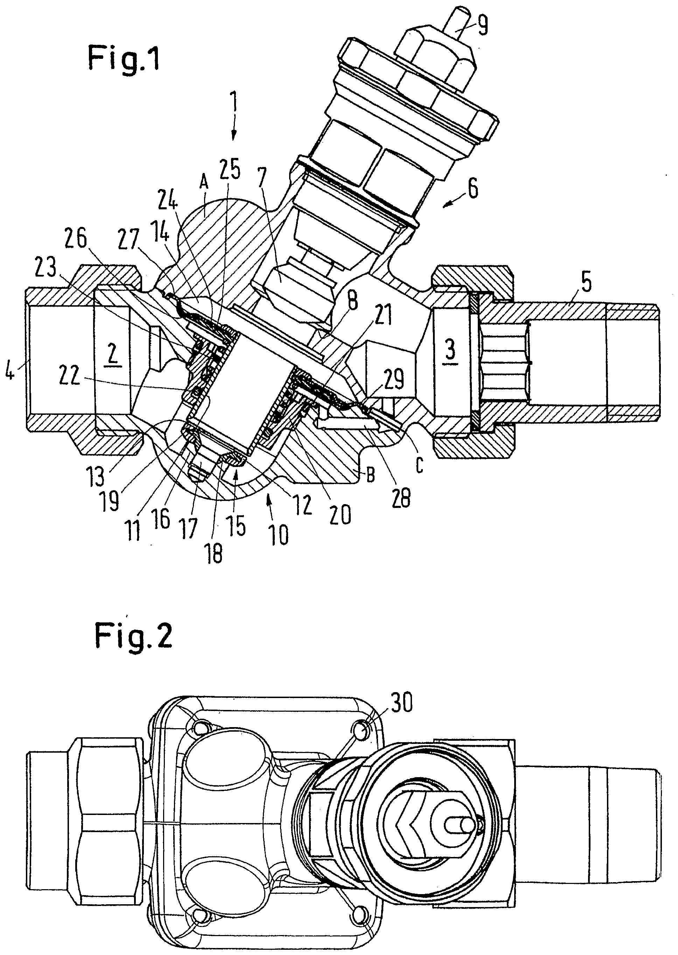

Wie aus Fig. 1 zu erkennen ist, ist die erste Ventil-einrichtung 6 ausschließlich im ersten Teil A des Gehäuses und die zweite Ventileinrichtung 10 ausschließlich im zweiten Teil B des Gehäuses angeordnet. Erst durch eine Verbindung der beiden Teile A, B des Gehäuses entsteht die gewünschte Ventilanordnung. Wenn die beiden Teile A, B entlang der Trennfläche C verbunden worden sind, können sie durch nicht näher dargestellte Bolzen, die durch Bolzenöffnungen 30 geführt werden, miteinander verbunden werden.

Dadurch, daß die beiden Teile A, B des Gehäuses an der Trennfläche C offen sind, wenn die beiden Teile voneinander getrennt sind, ist eine Montage der beiden Gehäuseteile mit den jeweils eingesetzten Ventileinrichtungen 6, 10 relativ einfach. Die Montageorte sind frei zugänglich und es besteht eine gute Zugänglichkeit zum Inneren der beiden Teile A, B des Gehäuses. Dadurch, daß die Membran 24 zwischen den beiden Teilen A, B des Gehäuses eingespannt ist, benötigt man nicht einmal eine zusätzliche Dichtung.

## Patentansprüche

1. Heizungs-Ventilanordnung mit einem Gehäuse, das einen Einlaß (2) und einen Auslaß (3) aufweist, einer ersten Ventileinrichtung, die einen Ventilsitz und ein Ventilelement aufweist, und einer zweiten Ventileinrichtung, die eine konstante Druckdifferenz über der ersten Ventileinrichtung einstellt, wobei das Gehäuse einen ersten Teil (A) und einen zweiten Teil (B) aufweist, die miteinander verbunden sind, und die erste Ventileinrichtung (6) ausschließlich in dem ersten Teil (A) des Gehäuses angeordnet ist, **dadurch gekennzeichnet, daß** die zweite Ventileinrichtung (10) ausschließlich in einem zweiten Teil (B) des Gehäuses angeordnet ist.

2. Anordnung nach Anspruch 1, **dadurch gekennzeichnet, daß** die zweite Ventileinrichtung (10) eine Membran (24) aufweist, die ein Druckregel-Ventilelement (11) betätigt, wobei die Membran (24) zwischen dem ersten Teil (A) und dem zweiten Teil (B) des Gehäuses eingespannt ist.

3. Anordnung nach Anspruch 2, **dadurch gekennzeichnet, daß** ein Druckübertragungskanal (29) vom Auslaß (3) zu der der ersten Ventileinrichtung (6) abgewandten Seite der Membran (24) eine Trennfläche (C) zwischen dem ersten Teil (A) und dem zweiten Teil (B) des Gehäuses durchsetzt.

4. Anordnung nach Anspruch 3, **dadurch gekennzeichnet, daß** der Druckübertragungskanal (29) außerhalb der Membran (24) angeordnet ist.

5. Anordnung nach Anspruch 4, **dadurch gekennzeichnet, daß** die Membran (24) punktsymmetrisch ausgebildet ist.

6. Anordnung nach einem der Ansprüche 2 bis 5, **dadurch gekennzeichnet, daß** das Druckregel-Ventilelement (11) der zweiten Ventileinrichtung (10) als Hohlzylinder ausgebildet ist.

7. Anordnung nach einem der Ansprüche 2 bis 6, **dadurch gekennzeichnet, daß** das Druckregel-Ventilelement (11) in einem Einsatz (20) geführt ist, der im zweiten Teil (B) des Gehäuses befestigt ist.

8. Anordnung nach Anspruch 7, **dadurch gekennzeichnet, daß** der Einsatz (20) in den zweiten Teil (B) des Gehäuses eingeschraubt ist.

9. Anordnung nach einem der Ansprüche 1 bis 8, **dadurch gekennzeichnet, daß** die zweite Ventileinrichtung (10) ein Ventilsitzelement (15) aufweist, das auf einem Vorsprung (16) im zweiten Teil (B) des Gehäuses befestigt ist.

10. Anordnung nach Anspruch 9, **dadurch gekennzeichnet, daß** das Ventilsitzelement (15) einen Korpus (18) aufweist, durch den ein Befestigungselement (17) geführt ist und der eine Beschichtung (19) trägt.

11. Anordnung nach einem der Ansprüche 1 bis 10, **dadurch gekennzeichnet, daß** der erste Teil (A) und der zweite Teil (B) des Gehäuses übereinstimmende Bolzenöffnungen (30) aufweisen, durch die Spannbolzen geführt sind.

## Claims

1. A heating valve assembly comprising a housing having an inlet (2) and an outlet (3), a first valve means having a valve seat and a valve element, and a second valve means setting a constant pressure difference across the first valve means, wherein
the housing comprises a first part (A) and a second part (B) which are connected to each other, and the first valve means (6) is arranged exclusively in the first part (A) of the housing,
**characterised in that**,
the second valve device (10) is arranged exclusively in a second part (B) of the housing.

2. Arrangement according to Claim 1, **characterised in that**, the second valve device (10) comprises a diaphragm (24), which actuates a pressure control valve element (11), wherein the diaphragm (24) is clamped between the first part (A) and the second part (B) of the housing

3. Arrangement according to Claim 2, **characterised in that**, a pressure transmission channel (29) from the outlet (3) to the side of the diaphragm (24) remote from the first valve device (6) passes through a separation surface (C) between the first part (A) and the second part (B) of the housing.

4. Arrangement according to Claim 3, **characterised in that**, the pressure transmission channel (29) is arranged outside the diaphragm (24).

5. Arrangement according to Claim 4, **characterised in that**, the diaphragm (24) is point symmetrical.

6. Arrangement according to one of the Claims 2 to 5, **characterised in that**, the pressure regulating valve element (11) of the second valve device (10) is designed as a hollow cylinder.

7. Arrangement according to one of the Claims 2 to 6, **characterised in that**, the pressure regulating valve element (11) is guided in an insert (20), which is fixed in the second part (B) of the housing.

8. Arrangement according to Claim 7, **characterised in that**, the insert (20) is screwed into the second part (B) of the housing

9. Arrangement according to one of the Claims 1 to 8, **characterised in that**, the second valve means (10) comprises a valve seat member (15) mounted on a projection (16) in the second part (B) of the housing.

10. Arrangement according to Claim 9, **characterised in that**, the valve seat element (15) has a body (18) through which a fastening element (17) is passed and which carries a coating (19).

11. Arrangement according to one of the Claims 1 to 10, **characterised in that**, the first part (A) and the second part (B) of the housing have corresponding bolt openings (30) through which clamping bolts are passed.

## Revendications

1. Agencement de vanne de chauffage, pourvu d'un boîtier, qui comporte une entrée (2) et une sortie (3), d'un premier système de vanne, qui comporte un siège de vanne et un élément de vanne, et d'un deuxième système de vanne, qui règle une pression différentielle par l'intermédiaire du premier système de vanne, le boîtier comportant une première partie (A) et une deuxième partie (B) qui sont assemblées l'une à l'autre, et le premier système de vanne (6) étant placé exclusivement dans la première partie (A) du boîtier, **caractérisé en ce que** le deuxième système de vanne (10) est placé exclusivement dans une deuxième partie (B) du boîtier.

2. Agencement selon la revendication 1, **caractérisé en ce que** le deuxième système de vanne (10) comporte une membrane (24) qui actionne un élément de vanne régulateur de pression (11), la membrane (24) étant enserrée entre la première partie (A) et la deuxième partie (B) du boîtier.

3. Agencement selon la revendication 2, **caractérisé en ce que** de la sortie (3) vers le côté de la membrane (24) qui est opposé au premier système de vanne (6), un canal de transmission de pression (29) traverse une surface de séparation (C) entre la première partie (A) et la deuxième partie (B) du boîtier.

4. Agencement selon la revendication 3, **caractérisé en ce que** le canal de transmission de pression (29) est placé à l'extérieur de la membrane (24).

5. Agencement selon la revendication 4, **caractérisé en ce que** la membrane (24) est conçue en symétrie ponctuelle.

6. Agencement selon l'une quelconque des revendications 2 à 5, **caractérisé en ce que** l'élément de vanne régulateur de pression (11) du deuxième système de vanne (10) est conçu sous la forme d'un cylindre creux.

7. Agencement selon l'une quelconque des revendications 2 à 6, **caractérisé en ce que** l'élément de vanne régulateur de pression (11) est guidé dans un insert (20) qui est fixé dans la deuxième partie (B) du boîtier.

8. Agencement selon la revendication 7, **caractérisé en ce que** l'insert (20) est vissé dans la deuxième partie (B) du boîtier.

9. Agencement selon l'une quelconque des revendications 1 à 8, **caractérisé en ce que** le deuxième système de vanne (10) comporte un élément de siège de vanne (15) qui est fixé sur une saillie (16) dans la deuxième partie (B) du boîtier.

10. Agencement selon la revendication 9, **caractérisé en ce que** l'élément de siège de vanne (15) comporte un corps (18) à travers lequel est guidé un élément de fixation (17) et qui porte un revêtement (19).

11. Agencement selon l'une quelconque des revendications 1 à 10, **caractérisé en ce que** la première partie (A) et la deuxième partie (B) du boîtier comportent des ouvertures pour boulon (30) concordantes, à travers lesquelles sont guidés des boulons de serrage.
